# EUROPEAN PATENT SPECIFICATION

(11) **EP 2 125 268 B1**
(45) Date of publication and mention of the grant of the patent: **23.06.2010**
(21) Application number: 08701949.3
(22) Date of filing: 28.01.2008
(51) Int. Cl.: B21J 15/22, B21J 15/06

(54) **FASTENER INSTALLATION TOOL**
BEFESTIGUNGSINSTALLATIONSWERKZEUG
OUTIL D'INSTALLATION DE FIXATION

(30) Priority: 16.03.2007 GB 0705144
(43) Date of publication of application: 02.12.2009
(73) Proprietor: Avdel UK Limited, Welwyn Garden City Hertfordshire AL7 1LY (GB)
(72) Inventor: SEEWRAJ, Angraj, Kumar, Hertfordshire AL6 0LQ (GB); BEECHERL, Peter, Michael, Algonac, MI 48001 (US)
(74) Representative: Mackenzie, Andrew Bryan
(86) International application number: PCT/GB2008/000276
(87) International publication number: WO 2008/113967

(56) References cited:
- GB-A- 2 436 311

## Description

This invention relates to fastener installation tools, and in particular to installation tools for installing breakstem fasteners, wherein a part of the fastener is broken off during installation (see e.g. GB-A-2 436 311 disclosing the preamble of claim 1).

Fastener installation tools for breakstem fasteners, such as a blind rivet or bolt, install the fastener by applying a relative pulling action to the stem of the fastener, until the stem is caused to break at a weakened or breakneck point, leaving part of the stem plugging the body of the fastener. The tool may incorporate a pneumatic or hydraulic intensifier, whereby the pulling stroke of the head is actuated when hydraulic fluid enters an inlet port provided in the forging (or casting) of the tool head. Such tools are well known, for example those available under the trade mark Genesis.

The inlet port extends into the tool head from a bore formed in the forging. Currently known tools have inlet ports which are circular in cross-section.

During the broaching of a fastener by the installation tool, the pressure within the head of the tool reaches a peak. This pressure peak consequently causes stresses in the head forging, and particularly around the hydraulic inlet port. The operational life of the head is consequentially limited, as it will eventually fail by cracking around the hydraulic inlet port. The tool is therefore rendered unusable until a replacement head has been fitted.

The value of the pressure peak within the head on broaching increases with the broach load which must be applied to install the fastener, i.e. the force which must be applied to cause the fastener stem to fracture at the breakneck point.

It is an aim of the present invention to overcome or at least mitigate the above problems.

Accordingly, the present invention provides, in one aspect, a hydro-pneumatically operated fastener installation tool, including a head having hydraulically driven gripping means for gripping and pulling the stem of a fastener, thereby to install the fastener, and a hydraulic inlet port provided in the head for supplying hydraulic fluid to a cylinder to drive the gripping and pulling means, wherein the cross-sectional shape of the hydraulic inlet port is non-circular, such that a cross section of the inlet port has a longitudinal axis and lateral axis, wherein the longitudinal axis runs widthways across the tool head.

An advantage of the present invention is that stress around the hydraulic inlet port in the tool head caused on fastener broaching is minimised. Consequently, potential deterioration of the tool head is minimised and the operating life of the head lengthened in comparison to currently known tool heads.

A further advantage is that the tool head can be compatible with known installation tools such that it is interchangeable with currently known tool heads.

Preferably the hydraulic inlet port is oval in cross-section. The inlet port may also be formed of an irregular oval, or an elongated slot, which could be fully radiused at each end.

The central axis of the inlet port may be perpendicular to the central axis of the head cylinder.

An embodiment of the present invention will now be described by way of example and with reference to the accompanying drawings in which:
Figure 1 is a side elevation of an installation tool in accordance with the present invention;
Figure 2 is an elevation of the underside of the head of the installation tool of Figure 1;
Figure 3 is a longitudinal cross-section of the head of the installation tool of Figure 1.
Figure 4 is an axial cross-section of the head of the installation tool of Figure 1.
Figures 5 and 6 are comparison tables of maximum stresses encountered in currently known tool heads and embodiments of tool heads according to the invention, at internal tool head pressures of 37.92 MPa and 47.57 MPa respectively.

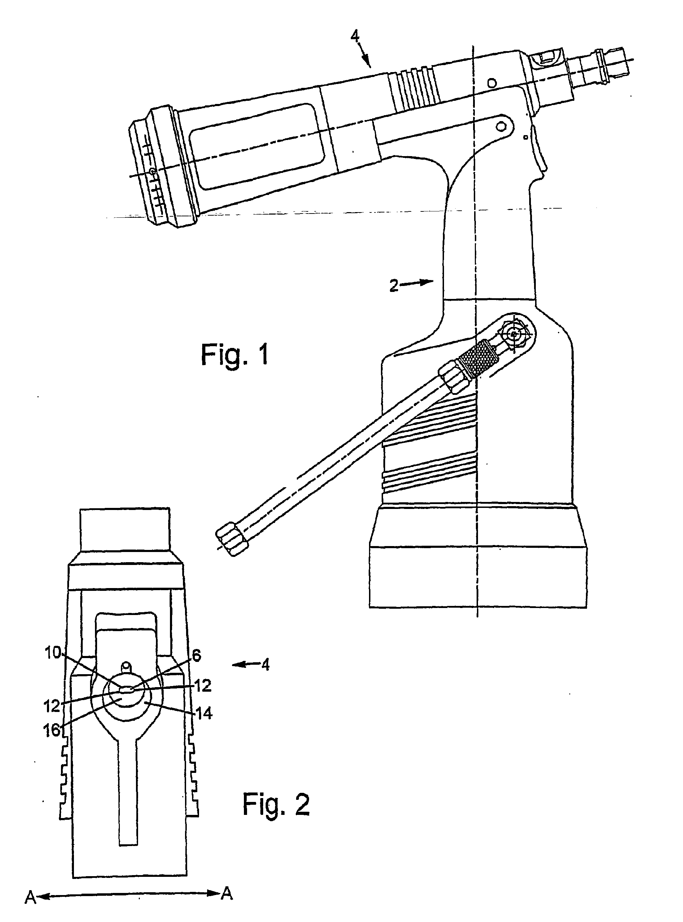

Referring to Figures 1 and 2, the present invention provides a fastener installation tool 2 having a tool head 4. An inlet port 6 is provided in the tool head 4 to allow hydraulic fluid to enter a head cylinder 8 provided in the head 4.

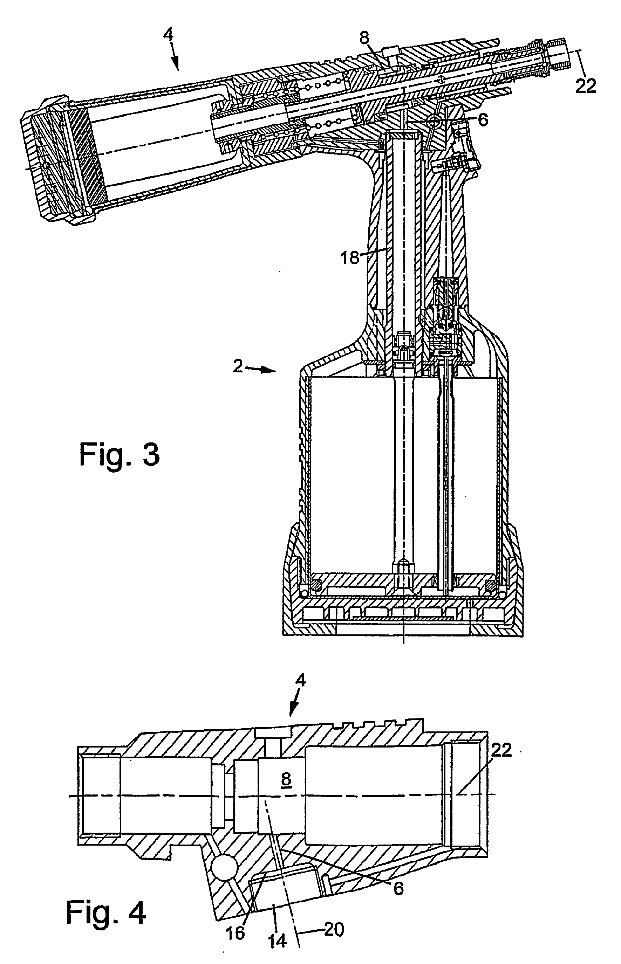

As illustrated in Figure 2, the inlet port 6 comprises an elongated slot 10 with a full radii at each end 12. The longitudinal axis of a cross-section of the slot 10, i.e. the axis extending between the ends 12, run widthways across the tool head 4, i.e. in the direction of arrow A on Figure 2, and the lateral-axis of the cross-section runs-lengthways across the tool. The inlet port 6 extends from the inner surface 16 of a bore 14 (which accepts an intensifier tube 18 (Figure 3) when the head is attached to the tool), to the head cylinder 8. As illustrated in Figure 4, the central axis 20 of the inlet port 6 is normal to the inner surface 16, and is therefore angled relative to the central axis 22 of the head cylinder.

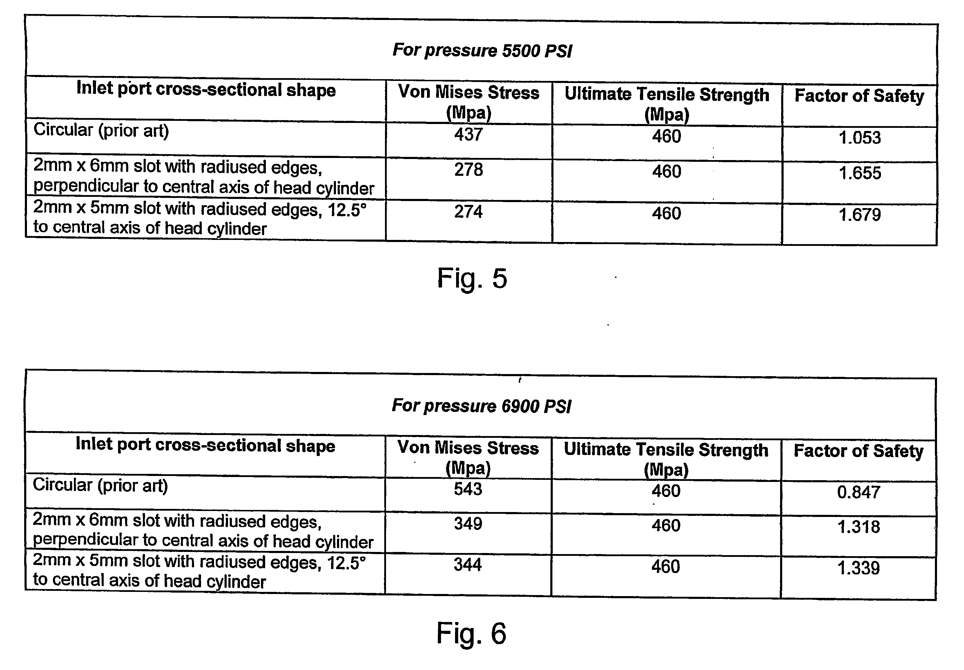

Referring to the tables of Figures 5 and 6, the maximum stress occurring in a metal tool head of a tool according to the present invention is lower than that which occurs in the prior art, wherein the inlet port has a circular cross-section.

In an alternative embodiment, the inlet port 6 may not be normal to the inner surface 16 of the bore 14. For example, the inlet port 6 could be arranged to be perpendicular to the axis of the head cylinder 8. Therefore the longitudinal axis of a cross-section of the inlet port 6 would be perpendicular to the axis of the head cylinder 8. This embodiment represents the second entry on the tables of Figures 5 and 6.

The effective cross-sectional area of the inlet port 6 of the present invention may be the equal to that of the circular port provided in currently known tool heads.

## Claims

1. A hydro-pneumatically operated fastener installation tool (2), including a head (4) having hydraulically driven gripping and pulling means for gripping and pulling the stem of a fastener, thereby to install the fastener, and a hydraulic inlet port (6) provided in the head (4) for supplying hydraulic fluid to a cylinder (8) to drive the gripping and pulling means, **characterised in that** the cross-sectional shape of the hydraulic inlet port (6) is non-circular, such that a cross section of the inlet port (6) has a longitudinal axis and lateral axis, wherein the longitudinal axis runs widthways across the tool head (4).

2. A fastener installation tool as claimed in claim 1, wherein the cross-sectional shape of the inlet port (6) is oval.

3. A fastener installation tool as claimed in claim 1, wherein the cross-sectional shape of the inlet port (6) is an irregular oval.

4. A fastener installation tool as claimed in claim 1, wherein the cross-sectional shape of the inlet port (6) is a longitudinal slot (10).

5. A fastener installation tool as claimed in claim 4 wherein at least one end of the longitudinal slot (10) is fully radiused.

6. A fastener installation tool as claimed in any of the preceding claims wherein a central axis (20) of the inlet port (6) is perpendicular to a central axis (22) of the head cylinder (8).

## Patentansprüche

1. Hydropneumatisch betätigtes Installationswerkzeug (2) für Befestigungsmittel, das einen Kopf (4) mit hydraulisch angetriebenen Greif- und Zugeinrichtungen zum Ergreifen und Ziehen des Schaftes eines Befestigungsmittels, um auf diese Weise das Befestigungsmittel zu installieren, und mit einem hydraulischen Einlassanschluss (6) einschließt, der in dem Kopf (4) vorgesehen ist, um Hydraulikflüssigkeit an einen Zylinder (8) zum Antrieb der Greif- und Zugeinrichtungen zu liefern, **dadurch gekennzeichnet, dass** die Querschnittsform der hydraulischen Einlassöffnung (6) nicht kreisförmig ist, derart, dass ein Querschnitt der Einlassöffnung (6) eine Längsachse und eine Querachse aufweist, wobei die Längsachse in Richtung der Breite über dem Werkzeug-Kopf (4) hinwegläuft.

2. Installationswerkzeug für Befestigungsmittel nach Anspruch 1, bei dem die Querschnittsform der Einlassöffnung (6) oval ist.

3. Installationswerkzeug für Befestigungsmittel nach Anspruch 1, bei dem die Querschnittsform der Einlassöffnung (6) eine unregelmäßige ovale Form ist.

4. Installationswerkzeug für Befestigungsmittel nach Anspruch 1, bei dem die Querschnittsform der Einlassöffnung (6) ein Längsschlitz (10) ist.

5. Installationswerkzeug für Befestigungsmittel nach Anspruch 4, bei dem zumindest ein Ende des Längsschlitzes (10) vollständig abgerundet ist.

6. Installationswerkzeug für Befestigungsmittel nach einem der vorhergehenden Ansprüche, bei dem eine Mittelachse (20) der Einlassöffnung (16) senkrecht zu einer Mittelachse (22) des Kopfzylinders (8) angeordnet ist.

## Revendications

1. Outil d'installation de fixation (2) actionné de manière hydropneumatique, comprenant une tête (4) ayant des moyens de préhension et de traction entraînés de manière hydraulique pour saisir et tirer la tige d'une fixation afin d'installer ainsi la fixation, et un orifice d'entrée hydraulique (6) prévu dans la tête (4) pour alimenter en fluide hydraulique un cylindre (8) afin d'entraîner les moyens de préhension et de traction, **caractérisé en ce que** la forme transversale de l'orifice d'entrée hydraulique (6) n'est pas circulaire, de sorte qu'une section transversale de l'orifice d'entrée (6) a un axe longitudinal et un axe latéral, dans lequel l'axe longitudinal s'étend dans le sens de la largeur sur la tête (4) de l'outil.

2. Outil d'installation de fixation selon la revendication 1, dans lequel la forme transversale de l'orifice d'entrée (6) est ovale.

3. Outil d'installation de fixation selon la revendication 1, dans lequel la forme transversale de l'orifice d'entrée (6) est un ovale irrégulier.

4. Outil d'installation de fixation selon la revendication 1, dans lequel la forme transversale de l'orifice d'entrée (6) est une fente longitudinale (10).

5. Outil d'installation de fixation selon la revendication 4 dans lequel au moins une extrémité de la fente longitudinale (10) est complètement arrondie.

6. Outil d'installation de fixation tel que revendiqué dans l'une quelconque des revendications précédentes dans lequel un axe central (20) de l'orifice d'entrée (6) est perpendiculaire à un axe central (22) du cylindre (8) de tête.
